# EUROPÄISCHE PATENTSCHRIFT

(11) **EP 4 303 140 B1**
(45) Veröffentlichungstag und Bekanntmachung des Hinweises auf die Patenterteilung: **24.12.2025**
(21) Anmeldenummer: 23173026.8
(22) Anmeldetag: 12.05.2023
(51) Int. Cl.: F16K 3/26, F16K 31/06, F16K 1/12

(54) **VERPACKUNGSMASCHINE MIT COAXIALVENTIL**
PACKAGING MACHINE WITH COAXIAL VALVE
MACHINE D'EMBALLAGE AVEC SOUPAPE COAXIALE

(30) Priorität: 25.05.2022 DE 102022113270
(43) Veröffentlichungstag der Anmeldung: 10.01.2024
(73) Patentinhaber: MULTIVAC Sepp Haggenmüller SE & Co. KG, 87787 Wolfertschwenden (DE)
(72) Erfinder: Capriotti, Luciano, 87730 Bad Grönenbach (DE); Kirmse, Herbert, 87787 Wolfertschwenden (DE); Hammer, Michael, 87727 Babenhausen (DE)
(74) Vertreter: Grünecker Patent- und Rechtsanwälte PartG mbB

(56) Entgegenhaltungen:
- WO-A1-2016/207059
- JP-A- 2010 013 147
- US-A- 4 216 938
- US-A1- 2022 065 352

## Beschreibung

Die Erfindung betrifft eine Verpackungsmaschine mit einer Arbeitsstation, welche eine Fluidleitung aufweist, und den Betrieb einer solchen Verpackungsmaschine.

Aus der DE 10 2018 100 224 A1 ist eine Verpackungsmaschine mit einer Atmosphärenver-änderungsstation bekannt, durch welche eine Atmosphäre innerhalb einer herzustellenden Verpackung durch Evakuieren und/oder Begasen veränderbar ist. Die Verpackungsmaschine weist zum Verändern der Atmosphäre eine Druckregelvorrichtung auf, welche dazu konfiguriert ist, einen Evakuierungsdruck und/oder einen Begasungsdruck zu regeln. Die Druckregelvorrichtung umfasst ein erstes vorzugsweise elektrisch ansteuerbares 2/2-Wegeventil und ein zweites vorzugsweise elektrisch ansteuerbares 2/2-Wegeventil, wobei das erste und das zweite 2/2-Wegeventil parallel zueinander geschaltet und individuell ansteuerbar sind.

Aus der DE 10 2008 039 200 A1 ist ein Vakuumventil für Tiefziehwerkzeuge in Verpackungsmaschinen bekannt. Das Vakuumventil umfasst einen Ventilkörper, einen den Ventilkörper durchdringenden Strömungskanal und einen Dichtkörper. Der Dichtkörper ist längs eines Verstellwegs zwischen einer Offenstellung im geöffneten Zustand und einer Schließstellung im abgedichteten Zustand des Strömungskanals verstellbar. Der Dichtkörper umfasst eine Dichtkörperfläche, die in Schließstellung des Dichtkörpers mit einer im Bereich des Strömungskanals angeordneten Dichtfläche des Ventilkörpers zusammenwirkt und mit dem Verstellweg einen spitzen Winkel einschließt.

WO2016/207059 A1 offenbart die Merkmale der Oberbegriffe der Ansprüche 1 und 12.

Es ist Aufgabe der Erfindung, einen Weg anzugeben, wie ein Fluss von Fluid in einer Arbeitsstation einer Verpackungsmaschine effizient und möglichst genau kontrollierbar ist.

Gemäß einem Aspekt der Erfindung wird eine Verpackungsmaschine bereitgestellt. Die Verpackungsmaschine umfasst zumindest eine Arbeitsstation zum Bearbeiten zumindest eines Verpackungsteils. Die Arbeitsstation umfasst eine Fluidleitung. Die Verpackungsmaschine umfasst ein Ventil zum Steuern eines Flusses von Fluid durch die Fluidleitung. Die Verpackungsmaschine umfasst eine Steuerung zum Steuern des Ventils. Das Ventil umfasst einen Ventilkörper mit einem Durchflusskanal. Das Ventil umfasst einen Sperrkörper. Der Sperrkörper ist in dem Durchflusskanal entlang einer axialen Richtung zwischen einer geschlossenen Stellung und einer offenen Stellung verfahrbar. In der geschlossenen Stellung ist ein Fluss von Fluid durch den Durchflusskanal unterbunden. In der offenen Stellung ist ein Fluss von Fluid durch den Durchflusskanal freigegeben. Der Sperrkörper ist dazu konfiguriert, in der offenen Stellung des Sperrkörpers in der axialen Richtung von dem Fluid durchflossen zu werden.

Durch das Ventil lässt sich der Fluss von Fluid durch den Durchflusskanal beeinflussen. Da der Sperrkörper dazu konfiguriert ist, in der offenen Stellung von dem Fluid durchflossen zu werden, muss kein um den Sperrkörper herum oder an dem Sperrkörper vorbei führender Flussweg ausgebildet werden. Da das Fluid den Sperrkörper in der offenen Stellung des Sperrkörpers entlang der axialen Richtung durchfließt, kann eine Umlenkung des Fluids beim Durchfließen des Ventils gering gehalten werden. Durch das Durchfließen des Sperrkörpers in der axialen Richtung können Verwirbelungen des Fluids beim Durchfließen des Ventils vermieden oder reduziert werden.

Da das Verfahren des Sperrkörpers zwischen der geschlossenen Stellung und der offenen Stellung in dem Durchflusskanal und entlang der axialen Richtung erfolgt, kann ein Verschmutzen des Ventils, beispielsweise aufgrund von Ablagerungen, zumindest teilweise vermieden werden. Es ist nicht erforderlich, einen separaten Raum bereitzustellen, in welchen der Ventilkörper in der offenen Stellung zumindest teilweise einfahren kann. Somit kann das Ventil weitgehend totraumfrei ausgebildet werden.

Wenn sich der Sperrkörper in der geschlossenen Stellung befindet, können auf gegenüberliegenden Seiten des Sperrkörpers unterschiedliche Druckverhältnisse in dem Durchflusskanal vorliegen. Durch die unterschiedlichen Druckverhältnisse kann eine Kraft auf den Sperrkörper wirken. Vorzugsweise ist der Sperrkörper in der geschlossenen Stellung so in dem Durchflusskanal orientiert, dass die Kraft keine axiale Komponente aufweist. Bei einer solchen Anordnung kann der Sperrkörper entlang der axialen Richtung aus der geschlossenen Stellung bewegt werden, ohne dass eine aus den unterschiedlichen Druckverhältnissen zu beiden Seiten des Sperrkörpers resultierende Kraft überwunden werden muss. Der Sperrkörper kann damit besonders leichtgängig und reaktionsschnell bewegt werden.

Eine Wirkungsrichtung einer in der geschlossenen Stellung aufgrund von unterschiedlichen Druckverhältnissen auf gegenüberliegenden Seiten des Sperrkörpers auf den Sperrkörper wirkenden Kraft kann um zumindest 5 Grad, oder um zumindest 10 Grad, oder um zumindest, 20 Grad, oder um zumindest 30 Grad, oder um zumindest 40 Grad, oder um zumindest 50 Grad, oder um zumindest 60 Grad, oder um zumindest 70 Grad, oder um zumindest 80 Grad, oder um im Wesentlichen 90 Grad gegenüber der axialen Richtung geneigt sein. Wenn die durch den Druckunterschied auf gegenüberliegenden Seiten des Sperrkörpers in der geschlossenen Stellung des Sperrkörpers erzeugte Kraft auf den Sperrkörper gegenüber der axialen Richtung geneigt ist, muss der Sperrkörper beim Verfahren des Sperrkörpers entlang der axialen Richtung zumindest nicht die vollständige Kraft überwinden.

Das Ventil kann dazu konfiguriert sein, je nach Anwendung wahlweise mit unterschiedlichen Durchflussrichtungen betrieben zu werden. Die unterschiedlichen Durchflussrichtungen können gegenläufige Durchflussrichtungen sein.

Der Sperrkörper kann eine Sperrkörper-Passage umfassen. Die Sperrkörper-Passage kann dazu konfiguriert sein, in der offenen Stellung des Sperrkörpers in der axialen Richtung von dem Fluid durchflossen zu werden. Die Sperrkörper-Passage kann sich entlang der axialen Richtung erstrecken. Die Sperrkörper-Passage kann sich parallel zu der axialen Richtung von einem ersten Ende des Sperrkörpers zu einem zweiten Ende des Sperrkörpers erstrecken. Die Sperrkörper-Passage kann einen Durchflussquerschnitt des Sperrkörpers definieren. Die Sperrkörper-Passage kann beispielsweise einen runden Durchflussquerschnitt oder einen ovalen Durchflussquerschnitt oder einen rechteckigen Durchflussquerschnitt oder einen unregelmäßig geformten Durchflussquerschnitt definieren. Der Durchflussquerschnitt kann bezüglich der axialen Richtung symmetrisch ausgebildet sein.

Der Sperrkörper, insbesondere die Sperrkörper-Passage, kann einen Durchflussquerschnitt zwischen 50 Quadratmillimeter und 500 Quadratmillimeter aufweisen. Der Durchflussquerschnitt des Sperrkörpers kann entlang der axialen Richtung konstant sein. Wenn sich der Durchflussquerschnitt des Sperrkörpers entlang der axialen Richtung verändert, kann der minimale Durchflussquerschnitt des Sperrkörpers entlang der axialen Richtung zwischen 50 Quadratmillimeter und 500 Quadratmillimeter liegen.

Der Sperrkörper kann zumindest im Wesentlichen rohrförmig ausgebildet sein. Der Sperrkörper kann als rundes Rohr oder als ovales Rohr oder als rechteckiges Rohr oder als unregelmäßig geformtes Rohr ausgebildet sein. Eine rohrförmige Ausbildung des Sperrkörpers kann ein Bilden von Ablagerungen an dem Sperrkörper oder im Bereich des Sperrkörpers zumindest reduzieren.

Der Durchflusskanal kann sich entlang der axialen Richtung von einem Fluideinlass des Ventils zu einem Fluidauslass des Ventils erstrecken. Der Durchflusskanal kann dazu konfiguriert sein, entlang der axialen Richtung von dem Fluid durchflossen zu werden. Wenn sowohl der Durchflusskanal als auch der Sperrkörper entlang der axialen Richtung von dem Fluid durchflossen werden, lässt sich in der offenen Stellung ein geringer Durchflusswiderstand realisieren.

Das Fluid kann durch den Durchflusskanal fließen, indem es durch den in dem Durchflusskanal vorliegenden Sperrkörper fließt.

In dem Durchflusskanal kann ein Ventilsitz ausgebildet sein. Der Sperrkörper kann in der geschlossenen Stellung gegen den Ventilsitz abdichten. Eine abdichtende Kontaktfläche zwischen dem Sperrkörper und dem Ventilsitz kann beispielsweise senkrecht zu der axialen Richtung verlaufen oder gegenüber der axialen Richtung geneigt sein. Eine abdichtende Kontaktfläche zwischen dem Sperrkörper und dem Ventilsitz kann beispielsweise parallel zur axialen Richtung verlaufen.

Der Ventilsitz kann einstückig mit dem Ventilkörper ausgebildet sein. Der Ventilsitz kann an dem Ventilkörper befestigt sein.

Die Steuerung kann dazu konfiguriert sein, einen Öffnungsgrad des Ventils einzustellen. Die Steuerung kann dazu konfiguriert sein, einen Öffnungsgrad des Ventils stufenlos einzustellen. Die Steuerung kann dazu konfiguriert sein, den Sperrkörper zwischen der geschlossenen Stellung und der offenen Stellung des Sperrkörpers stufenlos zu verstellen.

Das Ventil kann einen Ventilantrieb umfassen. Der Ventilantrieb kann dazu konfiguriert sein, den Sperrkörper zu verfahren. Der Ventilantrieb kann dazu konfiguriert sein, den Sperrkörper kontaktlos zu verfahren. Der Ventilantrieb kann dazu konfiguriert sein, den Sperrkörper durch Anlegen oder Verändern eines Magnetfelds zu verfahren. Ein Permanentmagnet kann Teil des Sperrkörpers sein, oder fest mit dem Sperrkörper verbunden sein, oder in den Sperrkörper integriert sein. Der Ventilantrieb kann eine elektrische Spule umfassen, welche zum Generieren eines Magnetfelds konfiguriert ist. Durch das Magnetfeld kann eine Kraft auf den Permanentmagneten ausgeübt werden, um den Sperrkörper zu verfahren.

Das Ventil kann ein Vorspannelement umfassen. Das Vorspannelement kann beispielsweise als Feder ausgebildet sein. Das Vorspannelement kann den Sperrkörper in die geschlossene Stellung vorspannen. Das Ventil kann den Sperrkörper in einem stromlosen Zustand des Ventils in die geschlossene Stellung bewegen und/oder in der geschlossenen Stellung halten. Das Ventil kann den Sperrkörper bei einer Betriebsstörung, beispielsweise bei einem Ausfall des Ventilantriebs, in die geschlossene Stellung bewegen und/oder in der geschlossenen Stellung halten. Der Verstellantrieb kann dazu konfiguriert sein, eine entgegen der Vorspannung durch das Vorspannelement gerichtete Kraft auf den Sperrkörper auszuüben. Der Ventilantrieb kann dazu konfiguriert sein, eine entgegen der Vorspannung durch das Vorspannelement auf den Sperrkörper wirkende Kraft zu verändern, um eine Stellung des Sperrkörpers einzustellen.

Das Vorspannelement kann in einer Vorspannelement-Kammer des Ventilkörpers vorgesehen sein. Die Vorspannelement-Kammer kann mit einem Fluideinlass des Ventils in Flussverbindung stehen. Die Vorspannelement-Kammer kann in der geschlossenen Stellung und/oder in der offenen Stellung des Sperrkörpers mit einem Fluideinlass des Ventils in Flussverbindung stehen. Durch eine Flussverbindung zwischen der Vorspannelement-Kammer und dem Fluideinlass des Ventils kann ein Druckausgleich zwischen der Vorspannelement-Kammer und dem Fluideinlass des Ventils erfolgen. Durch den Druckausgleich kann ein Verschieben des Sperrkörpers durch das Vorspannelement erleichtert werden. Insbesondere kann der Sperrkörper aufgrund des Druckausgleichs leichter durch das Vorspannelement in Richtung des Fluideinlasses des Ventils verschiebbar sein.

Der Ventilantrieb kann dazu konfiguriert sein, den Sperrkörper auf zumindest eine Zwischenstellung zwischen der geschlossenen Stellung und der offenen Stellung zu verfahren. In der Zwischenstellung kann ein Fluss von Fluid durch den Durchflusskanal teilweise freigegeben sein. Eine Flussrate von Fluid durch den Durchflusskanal kann abhängig von einer jeweiligen Betriebssituation der Verpackungsmaschine und/oder der Arbeitsstation durch die Steuerung angepasst werden, indem der Sperrkörper geeignet verschoben wird.

Die Steuerung kann dazu konfiguriert sein, den Ventilantrieb elektrisch anzusteuern. Die Steuerung kann dazu konfiguriert sein, den Ventilantrieb mittels Pulsweitenmodulation (PWM) anzusteuern. Eine Ansteuerung des Ventilantriebs mittels Pulsweitenmodulation kann reaktionsschnell und stufenlos erfolgen. Die Steuerung kann dazu konfiguriert sein, durch Ansteuern des Ventilantriebs mittels Pulsweitenmodulation einen Öffnungsgrad des Ventils einzustellen. Die Steuerung kann dazu konfiguriert sein, durch Ansteuern des Ventilantriebs mittels Pulsweitenmodulation eine Stellung des Sperrkörpers entlang der axialen Richtung einzustellen. Insbesondere kann ein Öffnungsgrad des Ventils durch die Pulsweite festgelegt werden. Die Pulsweitenmodulation kann mit einer Frequenz durchgeführt werden, die hoch genug ist, dass die Ventilstellung während eines Tastzyklus zumindest im Wesentlichen unverändert bleibt. Alternativ könnte eine Ansteuerung mit einer niederfrequenten Rechteckspannung erfolgen, um beispielsweise das Ventil in einer bestimmten zeitlichen Abfolge zwischen dem vollständig geöffneten Zustand und dem vollständig geschlossenen Zustand zu verstellen.

Die Verpackungsmaschine kann einen Datenspeicher umfassen. Der Datenspeicher kann eine Nachschlagetabelle enthalten. In der Nachschlagetabelle kann ein Zusammenhang zwischen einem Öffnungsgrad des Ventils und einer Pulsweite gespeichert sein. Die Steuerung kann dazu konfiguriert sein, basierend auf einem Soll-Öffnungsgrad des Ventils aus der Nachschlagetabelle eine entsprechende Pulsweite zu ermitteln und den Ventilantrieb mit der ermittelten Pulsweite anzusteuern.

Die Verpackungsmaschine kann beispielsweise als Tiefziehverpackungsmaschine, oder als Schalenverschließmaschine, oder als Schlauchbeutelmaschine, oder als Beutelkammermaschine ausgebildet sein.

Die Arbeitsstation kann beispielsweise als Formstation oder als Siegelstation ausgebildet sein. Die Formstation kann dazu konfiguriert sein, in einer Folienbahn Verpackungsmulden zum Aufnehmen von einem oder mehreren Produkten zu formen, insbesondere durch Tiefziehen. Die Siegelstation kann dazu konfiguriert sein, mit einem oder mehreren Produkten befüllte Verpackungsmulden durch Ansiegeln einer Deckfolie zu verschließen.

Die Verpackungsmaschine kann eine Unterdruckquelle, insbesondere eine Vakuumpumpe, umfassen. Die Unterdruckquelle kann mit der Fluidleitung verbunden sein, um die Arbeitsstation mit Unterdruck zu versorgen. Beispielsweise kann die Unterdruckquelle eine Siegelstation (Arbeitsstation) mit Unterdruck zum zumindest teilweisen Evakuieren einer zu verschließenden Verpackung versorgen. Durch Verändern des Öffnungsgrads des Ventils kann eine Evakuierungsrate und/oder ein Gasfluss aus der Verpackung einstellbar sein. Beispielsweise kann die Unterdruckquelle eine Formstation (Arbeitsstation) mit Unterdruck zum Umformen eines Verpackungselements, insbesondere eines Folienelements, versorgen. Durch Verändern des Öffnungsgrads des Ventils kann eine Stärke des in der Formstation anliegenden Unterdrucks eingestellt werden, insbesondere zeitabhängig eingestellt werden.

Die Verpackungsmaschine kann eine Gasquelle umfassen. Die Gasquelle kann mit der Fluidleitung verbunden sein, um die Arbeitsstation mit Gas zu versorgen. Die Gasquelle kann dazu konfiguriert sein, eine Siegelstation (Arbeitsstation) mit Gas zum Begasen einer Verpackung zu versorgen. Durch Einstellen des Öffnungsgrads des Ventils kann eine Einblasgeschwindigkeit des Gases in die Verpackung oder ein Volumenstrom des Gases in die Verpackung angepasst werden. Beispielsweise kann die Unterdruckquelle eine Formstation (Arbeitsstation) mit Druckgas, insbesondere Druckluft, zum Umformen eines Verpackungselements, insbesondere eines Folienelements, versorgen. Durch Verändern des Öffnungsgrads des Ventils kann eine Stärke des in der Formstation anliegenden Gasdrucks eingestellt werden, insbesondere zeitabhängig eingestellt werden.

Das Ventil kann Teil der Arbeitsstation sein. Alternativ kann das Ventil außerhalb der Arbeitsstation vorgesehen sein, beispielsweise in einer mit der Fluidleitung der Arbeitsstation verbundenen Leitung.

Das Fluid kann ein Gas sein oder ein Gas umfassen. Das Fluid kann beispielsweise Luft sein oder Luft umfassen. Das Fluid kann beispielsweise ein Inertgas sein oder ein Inertgas umfassen.

Das Fluid kann eine Flüssigkeit sein oder eine Flüssigkeit umfassen. Beispielsweise kann das Fluid eine Kühlflüssigkeit zum Kühlen einer oder mehrerer Komponenten der Arbeitsstation umfassen. Beispielsweise kann das Fluid eine Heizflüssigkeit zum Heizen einer oder mehrerer Komponenten der Arbeitsstation umfassen.

Die Steuerung kann Teil der Arbeitsstation sein. Die Steuerung kann an der Arbeitsstation angebracht sein. Die Steuerung kann beabstandet von der Arbeitsstation vorgesehen sein. Die Steuerung kann als Teil einer Gesamtsteuerung der Verpackungsmaschine ausgebildet sein. Die Steuerung kann mit einer übergeordneten Steuerung der Verpackungsmaschine verbunden sein. Die Steuerung kann einen oder mehrere Mikroprozessoren umfassen. Die Steuerung kann eine oder mehrere Speichereinheiten umfassen.

Gemäß einem weiteren Aspekt der Erfindung wird ein Verfahren zum Betreiben einer Verpackungsmaschine bereitgestellt. Ein Fluss von Fluid durch eine Fluidleitung einer Arbeitsstation der Verpackungsmaschine wird durch Verfahren eines Sperrkörpers eines Ventils ein einem Ventilkörper des Ventils entlang einer axialen Richtung gesteuert. Der Sperrkörper des Ventils wird in einer zumindest teilweise geöffneten Stellung des Ventils entlang der axialen Richtung von dem Fluid durchflossen. In einer geschlossenen Stellung des Ventils wird der Sperrkörper des Ventils nicht entlang der axialen Richtung von dem Fluid durchflossen.

Das Steuern des Flusses von Fluid durch die Fluidleitung durch Verfahren des Sperrkörpers kann durch eine Steuerung erfolgen.

Die Arbeitsstation kann eine Siegelstation sein. In der Siegelstation können Verpackungen durch Ansiegeln einer Deckelfolie verschlossen werden. Das Fluid kann ein Gas sein. Das Fluid kann vor einem Verschließen der Verpackungen durch die Fluidleitung in die Verpackungen eingeblasen werden oder aus den Verpackungen gesaugt werden.

Während eines Arbeitstakts der Arbeitsstation oder der Verpackungsmaschine kann durch Verfahren des Sperrkörpers ein Öffnungsgrad des Ventils zunächst für eine erste Zeitdauer auf einem ersten Öffnungsgrad gehalten werden. Dann kann der Öffnungsgrad des Ventils für eine zweite Zeitdauer auf einen zweiten Öffnungsgrad erhöht werden. Dann kann der Öffnungsgrad des Ventils für eine dritte Zeitdauer auf einem dritten Öffnungsgrad gehalten werden. Der dritte Öffnungsgrad kann ein geringerer Öffnungsgrad als der zweite Öffnungsgrad sein. Die erste Zeitdauer, die zweite Zeitdauer und die dritte Zeitdauer können zeitlich direkt oder zeitlich beabstandet aufeinander folgen.

Beispielweise kann bei einem Evakuierungsvorgang einer Verpackung während der ersten Zeitdauer mit einem vergleichsweise geringen Öffnungsgrad des Ventils Gas durch die Fluidleitung aus der Verpackung gesaugt werden, um ein Mitreißen oder Aufwirbeln von Produkt zumindest teilweise zu vermeiden. Während der zweiten Zeitdauer kann der Öffnungsgrad erhöht werden, da aufgrund der bereits reduzierten Gasmenge in der Verpackung ein Mitreißen oder Aufwirbeln von Produkt unwahrscheinlicher ist. In der dritten Zeitdauer kann mit einem gegenüber der zweiten Zeitdauer verringerten Öffnungsgrad des Ventils Gas durch die Fluidleitung aus der Verpackung gesaugt werden, um einen Enddruck in der Verpackung möglichst genau einstellen zu können.

Gemäß einem weiteren Aspekt der Erfindung wird eine Verwendung eines proportional gesteuerten Coaxialventils bereitgestellt. Das proportional gesteuerte Coaxialventil wird verwendet, um eine Absauggeschwindigkeit oder eine Einblasgeschwindigkeit von Gas in einer Arbeitsstation einer Verpackungsmaschine reaktionsschnell einzustellen, oder um einen genau definierten Enddruck beim Absaugen oder Einblasen von Gas in einer Arbeitsstation einer Verpackungsmaschine zu erreichen.

Das proportional gesteuerte Coaxialventil kann einen Ventilkörper mit einem Durchflusskanal umfassen. Das proportional gesteuerte Coaxialventil kann einen Sperrkörper umfassen. Der Sperrkörper kann in dem Durchflusskanal entlang einer axialen Richtung zwischen einer geschlossenen Stellung und einer offenen Stellung verfahrbar sein. In der geschlossenen Stellung kann ein Fluss von Fluid durch den Durchflusskanal unterbunden sein. In der offenen Stellung kann ein Fluss von Fluid durch den Durchflusskanal freigegeben sein.

Der Sperrkörper kann dazu konfiguriert sein, in der offenen Stellung des Sperrkörpers in der axialen Richtung von dem Fluid durchflossen zu werden.

Im Einklang mit den beschriebenen Aspekten betrifft die Erfindung eine Verpackungsmaschine, ein Verfahren zum Betreiben einer Verpackungsmaschine, und eine Verwendung eines proportional gesteuerten Coaxialventils. Merkmale und Erläuterungen, welche in Bezug auf einen dieser Aspekte beschrieben wurden, lassen sich auf die anderen Aspekte übertragen.

Die Verpackungsmaschine kann zum Durchführen des Verfahrens und/oder zum Durchführen der Verwendung geeignet, ausgelegt und/oder konfiguriert sein. Das Verfahren kann mittels der Verpackungsmaschine durchgeführt werden. Die Verwendung kann mittels der Verpackungsmaschine durchgeführt werden. Die Verwendung kann das Durchführen des Verfahrens umfassen. Das Verfahren kann die Verwendung umfassen.

Nachfolgend wird die Erfindung anhand von Ausführungsformen unter Bezugnahme auf die Figuren weiter erläutert.
Fig. 1 zeigt eine schematische Seiteneinsicht einer Verpackungsmaschine gemäß einer Ausführungsform.
Fig. 2 zeigt eine schematische Schnittansicht einer als Siegelstation ausgebildeten Arbeitsstation einer Verpackungsmaschine gemäß einer Ausführungsform.
Fig. 3 zeigt ein Ventil einer Arbeitsstation einer Verpackungsmaschine gemäß einer Ausführungsform in einer geschlossenen Stellung.
Fig. 4 zeigt das Ventil aus Fig. 3 in einer offenen Stellung.
Fig. 5 zeigt ein Ventil einer Arbeitsstation einer Verpackungsmaschine gemäß einer anderen Ausführungsform in einer geschlossenen Stellung.
Fig. 6 zeigt das Ventil aus Fig. 5 in einer offenen Stellung.

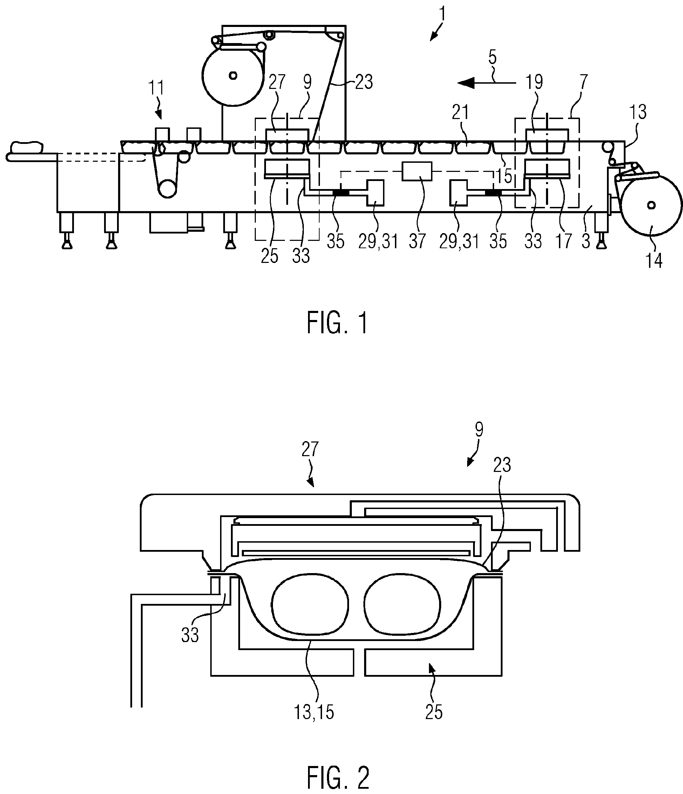

Fig.1 zeigt eine Verpackungsmaschine 1 gemäß einer Ausführungsform. Die dargestellte Verpackungsmaschine 1 ist als Tiefziehverpackungsmaschine ausgebildet. Alternativ kann die Erfindung auch auf andere Verpackungsmaschinen angewendet werden, beispielsweise auf eine Schalenverschließmaschine oder eine Schlauchbeutelmaschine.

Die Verpackungsmaschine 1 in der dargestellten Ausführungsform umfasst ein Maschinengestell 3, an welchem entlang einer Produktionsrichtung 5 hintereinander eine Formstation 7, eine Siegelstation 9 und eine Schneidstation 11 angeordnet sind. Eine Unterfolienbahn 13 wird von einer Vorratsrolle 14 abgerollt und entlang der Produktionsrichtung 5 nacheinander durch die Formstation 7, die Siegelstation 9 und die Schneidstation 11 gefördert.

In der Formstation 7 werden durch Tiefziehen Verpackungsmulden 15 in der Unterfolienbahn 13 ausgebildet. Die Formstation 7 umfasst ein Formwerkzeugunterteil 17 und ein Formwerkzeugoberteil 19, welche zum Formen der Verpackungsmulden 15 zusammenwirken. Zwischen der Formstation 7 und der Siegelstation 9 werden zu verpackende Produkte 21 in die Verpackungsmulden 15 eingebracht. In der Siegelstation 9 werden die befüllten Verpackungsmulden 15 durch Ansiegeln einer Deckfolie 23 an die Unterfolie 13 verschlossen. Die Siegelstation 9 umfasst ein Siegelwerkzeugunterteil 25 und ein Siegelwerkzeugoberteil 27. Das Siegelwerkzeugunterteil 25 und das Siegelwerkzeugoberteil 27 wirken zum Ansiegeln der Deckfolie 23 an die Unterfolienbahn 13 zusammen. Das Ansiegeln erfolgt insbesondere unter Einwirkung von Druck und/oder Wärme. In der Schneidstation 11 werden die verschlossenen Verpackungen aus dem Folienverbund getrennt.

Zur Unterstützung des Formprozesses kann die Formstation 7 mit einer Unterdruckquelle 29 verbunden sein. Die Unterdruckquelle 29 kann einen Unterdruck erzeugen, welcher ein Anlegen der Unterfolienbahn 13 an eine Fläche des Formwerkzeugunterteils 17 oder des Formwerkzeugoberteils 19 erleichtert. Alternativ oder zusätzlich kann die Formstation 7 zur Unterstützung des Formvorgangs an eine Gasquelle 31 angeschlossen sein. Die Gasquelle 31 kann Gas bereitstellen, welches die Unterfolienbahn 13 an eine Fläche des Siegelwerkzeugunterteils 17 oder des Siegelwerkzeugoberteils 19 drückt.

Um die Verpackungen vor dem Verschließen zu evakuieren, kann die Siegelstation 9 mit einer Unterdruckquelle 29 verbunden sein. Alternativ oder zusätzlich kann die Siegelstation 9 mit einer Gasquelle 31 verbunden sein, welche ein Gas zum Befüllen der Verpackungen vor dem Verschließen der Verpackungen bereitstellt.

In der dargestellten Ausführungsform sind sowohl die Formstation 7 als auch die Siegelstation 9 mit einer Unterdruckquelle 29 und/oder einer Gasquelle 31 verbunden. Alternativ könnte beispielweise lediglich die Formstation 7 oder lediglich die Siegelstation 9 mit einer Unterdruckquelle 29 und/oder einer Gasquelle 31 verbunden sein. Die Formstation 7 und die Siegelstation können sich in einer alternativen Ausführungsform eine Unterdruckquelle 29 oder eine Gasquelle 31 teilen.

Die jeweilige Unterdruckquelle 29 oder Gasquelle 31 kann der Formstation 7 oder der Siegelstation 9 über eine Fluidleitung 33 Unterdruck oder Gas zur Verfügung stellen. Die Fluidleitung 33 kann teilweise oder vollständig Teil der Formstation 7 oder der Siegelstation 9 sein. Die Unterdruckquelle 29 oder die Gasquelle 31 kann direkt mit der Fluidleitung 33 verbunden sein. Alternativ kann eine Verbindungsleitung die Unterdruckquelle 29 oder die Gasquelle 31 mit der Fluidleitung 33 verbinden. In der Flussverbindung zwischen der Unterdruckquelle 29 oder der Gasquelle 31 und der Formstation 7 oder der Siegelstation 9 ist ein Ventil 35 angeordnet, welches einen Gasfluss durch die Fluidleitung 33 reguliert. Das Ventil 35 kann insbesondere in der Fluidleitung 33 oder in einer Verbindungsleitung zwischen der Fluidleitung 33 und der Unterdruckquelle 29 oder der Gasquelle 31 vorgesehen sein.

Die Ventile 35 werden in der dargestellten Ausführungsform von einer Steuerung 37 gesteuert.

Fig. 2 zeigt eine schematische Schnittansicht der Siegelstation 9. Es ist dargestellt, dass die Fluidleitung 33 über zumindest eine in der Unterfolienbahn 13 vorgesehene Öffnung mit dem Inneren der Verpackung verbunden ist, um Gas in die Verpackung einzublasen oder die Verpackung zu evakuieren. Anschließend wird die Verpackung durch Ansiegeln der Deckfolie 23 an die Unterfolienbahn 13 verschlossen.

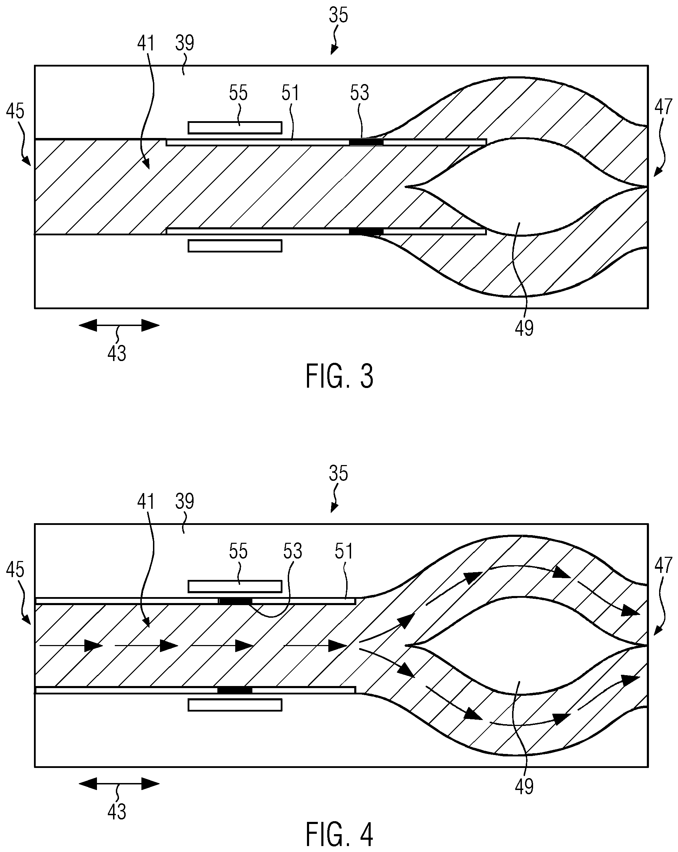

Die Fig. 3 und 4 zeigen eine erste Ausführungsform des Ventils 35 in einer Schnittansicht, wobei die Schnittebene parallel zu einer axialen Richtung 43 steht. In Fig. 3 ist das Ventil 35 geschlossen, so dass kein Durchfluss von Fluid durch die Fluidleitung 33 erfolgt. In Fig. 4 ist das Ventil 35 geöffnet, so dass Fluid durch die Fluidleitung 33 fließen kann.

Das Ventil 35 umfasst einen Ventilkörper 39 mit einem Durchflusskanal 41. Der Durchflusskanal 41 erstreckt sich entlang der axialen Richtung 43 von einem Fluideinlass 45 zu einem Fluidauslass 47. In dem Durchflusskanal 41 ist ein Ventilsitz 49 vorgesehen. Ein Sperrkörper 51 ist in dem Durchflusskanal 41 entlang der axialen Richtung 43 verfahrbar.

In der dargestellten Ausführungsform ist in den Sperrköper 51 ein Permanentmagnet 53 eingelassen. Außerhalb des Durchflusskanals 41 ist eine elektrische Spule 55 vorgesehen. Der Sperrkörper 51 ist durch ein Vorspannelement (in den Fig. 3 und 4 nicht dargestellt) in die Fig. 3 gezeigte geschlossene Position vorgespannt. In der geschlossenen Position liegt der Sperrkörper 51 dichtend an dem Ventilsitz 49 an und unterbindet so einen Fluss von Fluid durch den Durchflusskanal 41.

Um das Ventil 35 zumindest teilweise zu öffnen, veranlasst die Steuerung 37 einen Stromfluss durch die elektrische Spule 55. Hierdurch wird ein Magnetfeld erzeugt, durch welches eine Kraft auf den in den Sperrkörper 51 eingelassenen Permanentmagneten 53 wirkt. Durch diese Kraft wird der Sperrkörper 51 entlang der axialen Richtung 43 bewegt (in Fig. 3 von rechts nach links), um einen Fluss von Fluid durch den Durchflusskanal 41 zumindest teilweise freizugeben.

In Fig. 4 ist das Ventil 35 in einer offenen Stellung gezeigt, in welcher der Sperrkörper 51 den Fluss von Fluid durch den Durchflusskanal 41 vollständig freigibt. Vorzugsweise ist der Sperrkörper zwischen der in Fig. 3 dargestellten offenen Stellung und der in Fig. 4 dargestellten geschlossenen Stellung stufenlos verstellbar. Insbesondere kann ein Öffnungsgrad des Ventils 35 durch die Steuerung 37 mittels Pulsweitenmodulation eingestellt werden. Je nach Pulsweite kann die Stärke des durch die elektrische Spule 55 erzeugten Magnetfelds variieren. Je nach Stärke des Magnetfelds wird der Sperrkörper 51 mit einer entsprechenden Kraft entgegen der Vorspannung beaufschlagt. Es stellt sich jeweils ein Gleichgewicht zwischen der Vorspannung durch das Vorspannelement, insbesondere eine Feder, und der durch das Magnetfeld erzeugten Kraft ein, welches einem bestimmten Öffnungsgrad des Ventils 35 entspricht.

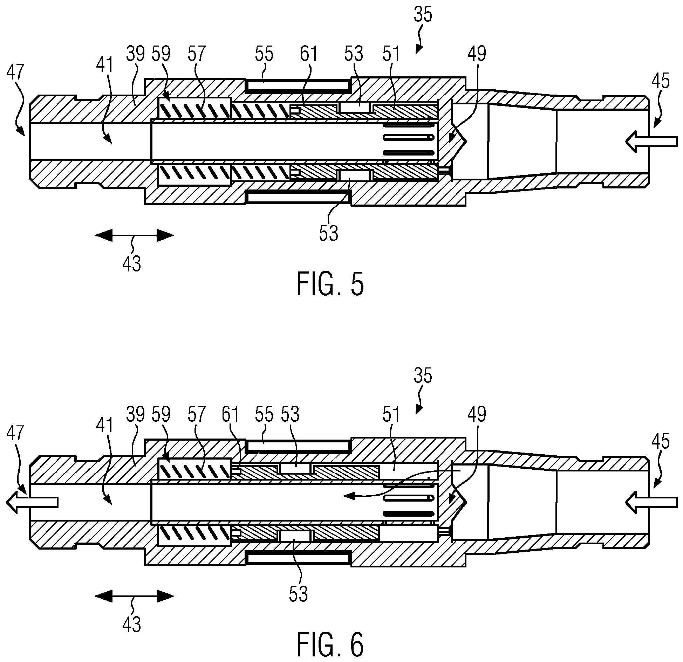

Die Fig. 5 und 6 zeigen eine zweite Ausführungsform des Ventils 35. Dieses unterscheidet sich von dem in den Fig. 3 und 4 gezeigten Ventil im Wesentlichen durch die Ausbildung des Ventilsitzes 49.

In Fig. 5 ist das Ventil 35 geschlossen, so dass kein Durchfluss von Fluid durch die Fluidleitung 33 erfolgt. In Fig. 6 ist das Ventil 35 geöffnet, so dass Fluid durch die Fluidleitung 33 fließen kann.

Das Ventil 35 umfasst einen Ventilkörper 39 mit einem Durchflusskanal 41. Der Durchflusskanal 41 erstreckt sich entlang der axialen Richtung 43 von einem Fluideinlass 45 zu einem Fluidauslass 47. In dem Durchflusskanal 41 ist ein Ventilsitz 49 vorgesehen. Ein Sperrkörper 51 ist in dem Durchflusskanal 41 entlang der axialen Richtung 43 verfahrbar.

In der dargestellten Ausführungsform ist in den Sperrköper 51 ein Permanentmagnet 53 eingelassen. Außerhalb des Durchflusskanals 41 ist eine elektrische Spule 55 vorgesehen. Der Sperrkörper 51 ist durch ein Vorspannelement 57 in die Fig. 5 gezeigte geschlossene Position vorgespannt. In der geschlossenen Position liegt der Sperrkörper 51 dichtend an dem Ventilsitz 49 an und unterbindet so einen Fluss von Fluid durch den Durchflusskanal 41.

Das Vorspannelement 57 ist in einer Vorspannelement-Kammer 59 des Ventilkörpers 39 vorgesehen. Die Vorspannelement-Kammer 59 steht über einen Bypass 61 mit dem Fluideinlass 45 in Flussverbindung. Durch die Flussverbindung zwischen der Vorspannelement-Kammer 59 und dem Fluideinlass 45 kann ein Druckausgleich zwischen der Vorspannelement-Kammer 59 und dem Fluideinlass45, wodurch ein Verschieben des Sperrkörpers durch das Vorspannelement erleichtert wird. Insbesondere lässt sich der Sperrkörper 51 aufgrund des Druckausgleichs durch das Vorspannelement 57 leichter in die geschlossene Position bewegen.

Um das Ventil 35 zumindest teilweise zu öffnen, veranlasst die Steuerung 37 einen Stromfluss durch die elektrische Spule 55. Hierdurch wird ein Magnetfeld erzeugt, durch welches eine Kraft auf den in den Sperrkörper 51 eingelassenen Permanentmagneten 53 wirkt. Durch diese Kraft wird der Sperrkörper 51 entgegen der Vorspannung durch das Vorspannelement 57 entlang der axialen Richtung 43 bewegt (in Fig. 5 von rechts nach links), um einen Fluss von Fluid durch den Durchflusskanal 41 zumindest teilweise freizugeben.

In Fig. 6 ist das Ventil 35 in einer offenen Stellung gezeigt, in welcher der Sperrkörper 51 den Fluss von Fluid durch den Durchflusskanal 41 vollständig freigibt.

## Patentansprüche

1. Verpackungsmaschine (1), wobei:
die Verpackungsmaschine (1) zumindest eine Arbeitsstation (7, 9) zum Bearbeiten zumindest eines Verpackungsteils umfasst;
die Arbeitsstation (7, 9) eine Fluidleitung (33) umfasst;
die Verpackungsmaschine (1) ein Ventil (35) zum Steuern eines Flusses von Fluid durch die Fluidleitung (33) umfasst;
die Verpackungsmaschine (1) eine Steuerung (37) zum Steuern des Ventils (35) umfasst;
das Ventil (35) einen Ventilkörper (39) mit einem Durchflusskanal (41) umfasst; **dadurch gekennzeichnet, dass**
das Ventil (35) einen Sperrkörper (51) umfasst, welcher in dem Durchflusskanal (41) entlang einer axialen Richtung (43) zwischen einer geschlossenen Stellung und einer offenen Stellung verfahrbar ist, wobei in der geschlossenen Stellung ein Fluss von Fluid durch den Durchflusskanal (41) unterbunden ist und in der offenen Stellung ein Fluss von Fluid durch den Durchflusskanal (41) freigegeben ist; und
wobei der Sperrkörper (51) dazu konfiguriert ist, in der offenen Stellung des Sperrkörpers (51) in der axialen Richtung (43) von dem Fluid durchflossen zu werden.

2. Verpackungsmaschine nach Anspruch 1, wobei der Sperrkörper (51) einen Durchflussquerschnitt zwischen 50 Quadratmillimeter und 500 Quadratmillimeter aufweist.

3. Verpackungsmaschine nach einem der vorangehenden Ansprüche, wobei der Sperrkörper (51) zumindest im Wesentlichen rohrförmig ausgebildet ist.

4. Verpackungsmaschine nach einem der vorangehenden Ansprüche, wobei der Sperrkörper (51) in der geschlossenen Stellung so in dem Durchflusskanal (41) orientiert ist, dass eine Kraft, welche in der geschlossenen Stellung aufgrund unterschiedlicher Druckverhältnisse in dem Durchflusskanal (41) auf gegenüberliegenden Seiten des Sperrkörpers (51) auf den Sperrkörper (51) wirkt, keine axiale Komponente aufweist.

5. Verpackungsmaschine nach einem der vorangehenden Ansprüche, wobei in dem Durchflusskanal (41) ein Ventilsitz (49) ausgebildet ist, gegen welchen der Sperrkörper (51) in der geschlossenen Stellung abdichtet.

6. Verpackungsmaschine nach einem der vorangehenden Ansprüche, wobei die Steuerung (37) dazu konfiguriert ist, einen Öffnungsgrad des Ventils (35) stufenlos einzustellen.

7. Verpackungsmaschine nach einem der vorangehenden Ansprüche, wobei das Ventil (35) einen Ventilantrieb (55) umfasst, welcher dazu konfiguriert ist, den Sperrkörper (51) zu verfahren.

8. Verpackungsmaschine nach Anspruch 7, wobei der Ventilantrieb (55) dazu konfiguriert ist, den Sperrkörper (51) auf zumindest eine Zwischenstellung zwischen der geschlossenen Stellung und der offenen Stellung zu verfahren, wobei in der Zwischenstellung ein Fluss von Fluid durch den Durchflusskanal (41) teilweise freigegeben ist.

9. Verpackungsmaschine nach Anspruch 7 oder 8, wobei die Steuerung (37) dazu konfiguriert ist, durch Ansteuern des Ventilantriebs (55) mittels Pulsweitenmodulation einen Öffnungsgrad des Ventils (35) einzustellen.

10. Verpackungsmaschine nach einem der vorangehenden Ansprüche, wobei die Arbeitsstation (7, 9) als Formstation (7) oder als Siegelstation (9) ausgebildet ist.

11. Verpackungsmaschine nach einem der vorangehenden Ansprüche, wobei die Verpackungsmaschine (1) eine Unterdruckquelle (29) oder eine Gasquelle (31) umfasst, wobei die Unterdruckquelle (29) oder die Gasquelle (31) mit der Fluidleitung (33) verbunden ist, um die Arbeitsstation (7, 9) mit Unterdruck oder mit Gas zu versorgen.

12. Verfahren zum Betreiben einer Verpackungsmaschine (1), umfassend:
Steuern eines Flusses von Fluid durch eine Fluidleitung (33) einer Arbeitsstation (7, 9) der Verpackungsmaschine (1) durch Verfahren eines Sperrkörpers (51) eines Ventils (35) in einem Ventilkörper (39) des Ventils (35) **dadurch gekennzeichnet, dass** der Sperrkörper entlang einer axialen Richtung (43) Verfahren wird, wobei der Sperrkörper (51) des Ventils (35) in einer zumindest teilweise geöffneten Stellung des Ventils (35) entlang der axialen Richtung (43) von dem Fluid durchflossen wird, aber nicht in einer geschlossenen Stellung des Ventils (35).

13. Verfahren nach Anspruch 12, wobei die Arbeitsstation (7, 9) eine Siegelstation (9) ist und das Fluid ein Gas ist, wobei in der Siegelstation (9) Verpackungen durch Ansiegeln einer Deckfolie (23) verschlossen werden, wobei das Fluid vor einem Verschließen der Verpackungen durch die Fluidleitung (33) in die Verpackungen eingeblasen wird oder aus den Verpackungen gesaugt wird.

14. Verfahren nach Anspruch 12 oder 13, wobei während eines Arbeitstakts der Arbeitsstation (7, 9) durch das Verfahren des Sperrkörpers (51) ein Öffnungsgrad des Ventils (35) zunächst für eine erste Zeitdauer auf einem ersten Öffnungsgrad gehalten wird, dann der Öffnungsgrad des Ventils (35) für eine zweite Zeitdauer auf einen zweiten Öffnungsgrad erhöht wird, und dann der Öffnungsgrad des Ventils (35) für eine dritte Zeitdauer auf einem dritten Öffnungsgrad gehalten wird, wobei der dritte Öffnungsgrad ein geringerer Öffnungsgrad als der zweite Öffnungsgrad ist.

15. Verwendung eines proportional gesteuerten Coaxialventils (35), um eine Absauggeschwindigkeit oder eine Einblasgeschwindigkeit von Gas in einer Arbeitsstation (7, 9) einer Verpackungsmaschine (1) reaktionsschnell einzustellen oder einen genau definierten Enddruck beim Absaugen oder Einblasen von Gas in einer Arbeitsstation (7, 9) einer Verpackungsmaschine (1) zu erreichen.

## Claims

1. Packaging machine (1), wherein:
the packaging machine (1) comprises at least one work station (7, 9) for processing at least one packaging part;
the work station (7, 9) comprises a fluid line (33);
the packaging machine (1) comprises a valve (35) for controlling a flow of fluid through the fluid line (33);
the packaging machine (1) comprises a control system (37) for controlling the valve (35);
the valve (35) comprises a valve body (39) with a flow channel (41);
**characterized in that**
the valve (35) comprises a blocking body (51) which is movable in the flow channel (41) along an axial direction (43) between a closed position and an open position, wherein in the closed position a flow of fluid through the flow channel (41) is prevented and in the open position a flow of fluid through the flow channel (41) is enabled; and
wherein the blocking body (51) is configured to be flowed through by the fluid in the axial direction (43) in the open position of the blocking body (51).

2. Packaging machine according to claim 1, wherein the blocking body (51) has a flow cross-section between 50 square millimeters and 500 square millimeters.

3. Packaging machine according to one of the preceding claims, wherein the blocking body (51) is at least substantially tubular.

4. Packaging machine according to one of the preceding claims, wherein the blocking body (51) in the closed position is oriented in the flow channel (41) such that a force acting on the blocking body (51) in the closed position due to different pressure conditions in the flow channel (41) on opposite sides of the blocking body (51) has no axial component.

5. Packaging machine according to one of the preceding claims, wherein a valve seat (49) is formed in the flow channel (41), wherein the blocking body (51) seals against the valve seat (49) in the closed position.

6. Packaging machine according to one of the preceding claims, wherein the control system (37) is configured to adjust an opening degree of the valve (35) in a stepless manner.

7. Packaging machine according to one of the preceding claims, wherein the valve (35) comprises a valve drive (55) configured to move the blocking body (51).

8. Packaging machine according to claim 7, wherein the valve drive (55) is configured to move the blocking body (51) to at least one intermediate position between the closed position and the open position, wherein in the intermediate position a flow of fluid through the flow channel (41) is partially enabled.

9. Packaging machine according to claim 7 or 8, wherein the control system (37) is configured to adjust an opening degree of the valve (35) by controlling the valve drive (55) by means of pulse width modulation.

10. Packaging machine according to one of the preceding claims, wherein the work station (7, 9) is configured as a forming station (7) or as a sealing station (9).

11. Packaging machine according to one of the preceding claims, wherein the packaging machine (1) comprises an underpressure source (29) or a gas source (31), wherein the underpressure source (29) or the gas source (31) is connected to the fluid line (33) for supplying the work station (7, 9) with underpressure or with gas.

12. Method for operating a packaging machine (1), comprising:
controlling a flow of fluid through a fluid line (33) of a work station (7, 9) of the packaging machine (1) by moving a blocking body (51) of a valve (35) in a valve body (39) of the valve (35) **characterized in that** the blocking body is moved along an axial direction (43), wherein the blocking body (51) of the valve (35) is flowed through by the fluid along the axial direction (43) in an at least partially opened position of the valve (35), but not in a closed position of the valve (35).

13. Method according to claim 12, wherein the work station (7, 9) is a sealing station (9) and the fluid is a gas, wherein packages are sealed in the sealing station (9) by sealingly attaching a cover film (23), wherein the fluid is injected into the packages through the fluid line (33) or is sucked out of the packages before sealing the packages.

14. Method according to claim 12 or 13, wherein during a working cycle of the work station (7, 9), by moving the blocking body (51), an opening degree of the valve (35) is first kept at a first opening degree for a first period of time, then the opening degree of the valve (35) is increased to a second opening degree for a second period of time, and then the opening degree of the valve (35) is kept at a third opening degree for a third period of time, wherein the third opening degree is a lower opening degree than the second opening degree.

15. Use of a proportionally controlled coaxial valve (35) to set a suction speed or an injection speed of gas in a work station (7, 9) of a packaging machine (1) in a fast reaction manner or to achieve a precisely defined final pressure when sucking or injecting gas in a work station (7, 9) of a packaging machine (1).

## Revendications

1. Machine d'emballage (1), dans laquelle :
la machine d'emballage (1) comprend au moins un poste de travail (7, 9) permettant de traiter au moins une partie d'emballage ;
le poste de travail (7, 9) comprend une conduite de fluide (33) ;
la machine d'emballage (1) comprend une soupape (35) permettant de commander une circulation de fluide à travers la conduite de fluide (33) ;
la machine d'emballage (1) comprend une commande (37) permettant de commander la soupape (35) ;
la soupape (35) comprend un corps de soupape (39) avec un canal d'écoulement (41) ;
**caractérisée en ce que**
la soupape (35) comprend un corps de blocage (51) qui peut être déplacé dans le canal d'écoulement (41) le long d'une direction axiale (43) entre une position fermée et une position ouverte, dans laquelle, dans la position fermée, une circulation de fluide à travers le canal d'écoulement (41) est empêchée et, dans la position ouverte, une circulation de fluide à travers le canal d'écoulement (41) est autorisée ; et
dans laquelle le corps de blocage (51) est configuré pour être traversé par le fluide dans la direction axiale (43) dans la position ouverte du corps de blocage (51).

2. Machine d'emballage selon la revendication 1, dans laquelle le corps de blocage (51) présente une section transversale d'écoulement comprise entre 50 millimètres carrés et 500 millimètres carrés.

3. Machine d'emballage selon l'une quelconque des revendications précédentes, dans laquelle le corps de blocage (51) est au moins essentiellement de forme tubulaire.

4. Machine d'emballage selon l'une quelconque des revendications précédentes, dans laquelle, en position fermée, le corps de blocage (51) est orienté dans le canal d'écoulement (41) de sorte qu'une force qui agit sur le corps de blocage (51) en position fermée en raison de rapports de pression différents au sein du canal d'écoulement (41) sur des côtés opposés du corps de blocage (51) ne présente aucune composante axiale.

5. Machine d'emballage selon l'une quelconque des revendications précédentes, dans laquelle un siège de soupape (49), contre lequel le corps de blocage (51) est étanche dans la position fermée, est formé dans le canal d'écoulement (41).

6. Machine d'emballage selon l'une quelconque des revendications précédentes, dans laquelle la commande (37) est configurée pour ajuster en continu un degré d'ouverture de la soupape (35).

7. Machine d'emballage selon l'une quelconque des revendications précédentes, dans laquelle la soupape (35) comprend un entraînement de soupape (55) configuré pour déplacer le corps de blocage (51).

8. Machine d'emballage selon la revendication 7, dans laquelle l'entraînement de soupape (55) est configuré pour déplacer le corps de blocage (51) sur au moins une position intermédiaire entre la position fermée et la position ouverte, la circulation de fluide à travers le canal d'écoulement (41) étant partiellement autorisée dans la position intermédiaire.

9. Machine d'emballage selon la revendication 7 ou 8, dans laquelle la commande (37) est configurée pour ajuster un degré d'ouverture de la soupape (35) en commandant l'entraînement de soupape (55) par modulation de largeur d'impulsion.

10. Machine d'emballage selon l'une quelconque des revendications précédentes, dans laquelle le poste de travail (7, 7) est réalisé sous la forme d'un poste de formage (7) ou sous la forme d'un poste de scellage (7).

11. Machine d'emballage selon l'une quelconque des revendications précédentes, dans laquelle la machine d'emballage (1) comprend une source de pression négative (29) ou une source de gaz (31), la source de pression négative (29) ou la source de gaz (31) étant reliée à la conduite de fluide (33) afin d'alimenter le poste de travail (7, 9) en pression négative ou en gaz.

12. Procédé de fonctionnement d'une machine d'emballage (1), comprenant les étapes consistant à :
commander une circulation de fluide à travers une conduite de fluide (33) d'un poste de travail (7, 9) de la machine d'emballage (1) par déplacement d'un corps de blocage (51) d'une soupape (35) dans un corps de soupape (39) de la soupape (35), **caractérisé en ce que** le corps de blocage est déplacé le long d'une direction axiale (43), dans lequel le corps de blocage (51) de la soupape (35) est traversé par le fluide le long de la direction axiale (43) dans une position au moins partiellement ouverte de la soupape (35), mais pas dans une position fermée de la soupape (35).

13. Procédé selon la revendication 12, dans lequel le poste de travail (7, 9) est un poste de scellage (9) et le fluide est un gaz, des emballages étant fermés au sein du poste de scellage (9) par scellage d'un film de couverture (23), et le fluide étant insufflé dans les emballages ou aspiré hors des emballages grâce à la conduite de fluide (33) avant la fermeture des emballages.

14. Procédé selon la revendication 12 ou 13, dans lequel, pendant un cycle de travail du poste de travail (7, 9) et grâce au déplacement du corps de blocage (51), un degré d'ouverture de la soupape (35) est d'abord maintenu à un premier degré d'ouverture pendant une première période de temps, puis le degré d'ouverture de la soupape (35) est augmenté à un deuxième degré d'ouverture pendant une deuxième période de temps, puis le degré d'ouverture de la soupape (35) est maintenu à un troisième degré d'ouverture pendant une troisième période de temps, le troisième degré d'ouverture étant un degré d'ouverture inférieur au deuxième degré d'ouverture.

15. Utilisation d'une soupape coaxiale à commande proportionnelle (35) afin d'ajuster promptement une vitesse d'aspiration ou une vitesse d'insufflation de gaz au sein d'un poste de travail (7, 9) d'une machine d'emballage (1) ou afin d'obtenir une pression finale définie avec précision lors de l'aspiration ou de l'insufflation de gaz au sein d'un poste de travail (7, 9) d'une machine d'emballage (1).
